# NEUE EUROPÄISCHE PATENTSCHRIFT

(11) **EP 2 812 839 B2**
(45) Veröffentlichungstag und Bekanntmachung des Hinweises auf die Entscheidung über den Einspruch: **30.11.2022**
(45) Hinweis auf die Patenterteilung: 10.01.2018
(21) Anmeldenummer: 13701949.3
(22) Anmeldetag: 18.01.2013
(51) Int. Cl.: G06F 21/57, G06F 21/44, G06F 21/60, G06Q 50/06, G01D 4/00, H04W 4/00, H04L 29/06

(54) **VERFAHREN ZUR KOMMUNIKATION VON ENERGIEVERBRAUCHSSPEZIFISCHEN MESSDATENELEMENTEN VON EINER SMART METER VORRICHTUNG AN EIN COMPUTERSYSTEM EINES ENERGIEVERSORGERS UND/ODER MESSSTELLENBETREIBERS**
METHOD FOR COMMUNICATION OF ENERGY CONSUMPTION-SPECIFIC MEASUREMENT DATA ELEMENTS BETWEEN A SMART METER DEVICE AND A COMPUTER SYSTEM OF A UTILITY COMPANY AND/OR OPERATOR OF A MEASURING SYSTEM
PROCÉDÉ DE COMMUNICATION D'ÉLÉMENTS DE DONNÉES DE MESURE SPÉCIFIQUES À UNE CONSOMMATION D'ÉNERGIE D'UN COMPTEUR INTELLIGENT À UN SYSTÈME INFORMATIQUE D'UN FOURNISSEUR D'ÉNERGIE ET/OU D'UN EXPLOITANT DE POINTS DE MESURE

(30) Priorität: 07.02.2012 DE 102012201810; 06.03.2012 DE 102012203518
(43) Veröffentlichungstag der Anmeldung: 17.12.2014
(73) Patentinhaber: Bundesdruckerei GmbH, 10969 Berlin (DE)
(72) Erfinder: DIETRICH, Frank, 12437 Berlin (DE); PAESCHKE, Manfred, 16348 Wandlitz (DE)
(74) Vertreter: Richardt Patentanwälte PartG mbB
(86) Internationale Anmeldenummer: PCT/EP2013/050908
(87) Internationale Veröffentlichungsnummer: WO 2013/117408

(56) Entgegenhaltungen:
- EP-A1- 2 216 627
- GB-A- 2 463 156
- US-A1- 2005 240 540
- US-A1- 2008 109 537
- US-A1- 2008 195 562
- US-A1- 2011 267 202
- "Technische Richtlinie BSI TR-03109 Version 0.20", , 10. Oktober 2011 (2011-10-10), XP055059493, Gefunden im Internet: URL:https://www.internet-sicherheit.de/ins titut/service/glossar/allgemeine-studien/b si-studien/?eID=dam_frontend_push&docID=26 40 [gefunden am 2013-04-12]
- "Technische Richtlinie TR-03109 Anhang A Version 0.20", , 10. Oktober 2011 (2011-10-10), XP055059483, Gefunden im Internet: URL:http://www.internet-sicherheit.de/inst itut/service/glossar/allgemeine-studien/bs i-studien/?eID=dam_frontend_push&docID=264 1 [gefunden am 2013-04-12]
- "TECHNISCHE RICHTLINIE BSI TR-03109 Anhang B", , 24. November 2011 (2011-11-24), XP055059481, Gefunden im Internet: URL:https://www.internet-sicherheit.de/ins titut/service/glossar/allgemeine-studien/b si-studien/?eID=dam_frontend_push&docID=26 42 [gefunden am 2013-04-12]
- "Technische Richtlinie TR-03109 Anhang C Version 0.20", , 10. Oktober 2011 (2011-10-10), XP055059491, Gefunden im Internet: URL:http://www.internet-sicherheit.de/inst itut/service/glossar/allgemeine-studien/bs i-studien/?eID=dam_frontend_push&docID=264 3 [gefunden am 2013-04-12]
- "Protection Profile for the Gateway of a Smart Metering System - BSI-CC-PP-0073 - v01.01.01(final draft)", , 26. August 2011 (2011-08-26), XP055059495, Gefunden im Internet: URL:http://web.archive.org/web/20111212205 642/https://www.bsi.bund.de/SharedDocs/Dow nloads/DE/BSI/SmartMeter/PP-SmartMeter.pdf ?__blob=publicationFile [gefunden am 2013-04-12]
- "3rd Generation Partnership Project; Technical Specification Group Services and System Aspects; Feasibility Study on the Security Aspects of Remote Provisioning and Change of Subscription for Machine to Machine (M2M) Equipment (Release 9", 3GPP TR 33.812 V9.2.0, June 2010 (2010-06),

## Beschreibung

Die Erfindung betrifft ein Verfahren zur Kommunikation von energieverbrauchsspezifischen Messdatenelementen von einer Smart Meter Vorrichtung an ein Computersystem eines Energieversorgers und/oder Messstellenbetreibers, sowie ein Computerprogrammprodukt.

Unter dem Begriff des "Smart Metering" wird allgemein der Gedanke verstanden, Kunden mit elektronischen Energieverbrauchserfassungsgeräten auszustatten, um so neben einer einfachen Erfassung der verbrauchten Energiemenge zum Beispiel über ein Netzwerk sowohl dem Kunden als auch dem Energieversorger weitere Funktionalitäten zur Verfügung zu stellen.

Möglich ist dabei, dass sich der Kunde in Echtzeit über seinen aktuellen Energieverbrauch informieren kann. Unter dem Begriff des "Energieverbrauchs" wird dabei der Verbrauch des Kunden bezüglich jeglicher Art von Energie verstanden, welche in Haushalte und Unternehmen geliefert wird. Dies umfasst neben den Energieformen Strom, Wasser und Gas auch beliebige weitere Energieformen wie beispielsweise Fernwärme.

Zur Erfassung des Energieverbrauchs kommen beim jeweiligen Verbraucher intelligente Messsysteme, auch intelligente Zähler oder "Smart-Meter" genannt, zum Einsatz. Smart-Meter sind Zähler für die verbrauchte Energie. Der Verbraucher kann dabei eine natürliche oder juristische Person sein, welche verschiedene messbare Energieformen wie Strom, Gas, Wasser oder Wärme verbraucht. Ziel der Verwendung von Smart-Metern ist die Implementierung intelligenter Messsysteme, was beispielsweise die Erhebung von variablen Leistungsentgelten in Abhängigkeit von Gesamtnachfrage und Netzauslastung ermöglichen würde. Dadurch können sich Energieversorgungsnetze insgesamt besser ausnutzen lassen.

Aus der technischen Richtlinie des BSI TR-03109 ist es bekannt, einen sogenannten Smart-Meter-Gateway, auch Konzentrator genannt, als eine zentrale Kommunikationseinheit vorzusehen, welche mit einzelnen oder mehreren Smart-Metern kommunizieren kann. Der Gateway ist dazu in der Lage, mit Geräten im sogenannten "Home Area Network" und mit Geräten im "Wide Area Network" zu kommunizieren. Das Home Area Network umfasst dabei alle Smart Meter, welche an den Gateway angekoppelt sind, sowie z.B. private Recheneinheiten der Verbraucher. Die privaten Recheneinheiten können z.B. zur Information über aktuelle, mit den Smart Metern erfasste Energieverbrauchswerte, eingesetzt werden. Das Wide Area Network ist dazu ausgebildet, um eine Kommunikation von Gateway und autorisierten Marktteilnehmern zu ermöglichen. Beispielsweise kann das Gateway die Daten aller Smart-Meter sammeln und diese an eine übergeordnete Sammelstelle, beispielsweise einen Energieversorger oder einen Messstellenbetreiber zur Verfügung stellen.

Das Dokument "Protection Profile for the Gateway of a Smart Metering System", BSI-CC-PP-0073, v01.01.01, beschreibt mögliche Bedrohungen eines Smart-Meter-Gateways in seiner Einsatzumgebung und definiert die Mindestanforderungen für entsprechende Sicherheitsmaßnahmen. Das Schutzprofil für das Smart-Meter-Gateway konzentriert sich auf die zu erfüllende Sicherheitsleistung eines verbauten Gateways und definiert für die Schnittstellen sicherheitstechnische Anforderungen, die jedes Gateway bereitstellen sollte.

Der Erfindung liegt die Aufgabe zugrunde, ein Verfahren zur Kommunikation von energieverbrauchsspezifischen Messdatenelementen von einer Smart Meter Vorrichtung an ein Computersystem eines Energieversorgers und/oder Messstellenbetreibers sowie ein Computerprogrammprodukt, bereitzustellen.

Die der Erfindung zugrunde liegenden Aufgaben werden mit den Merkmalen der unabhängigen Patentansprüche gelöst. Bevorzugte Ausführungsformen der Erfindung sind in den abhängigen Patentansprüchen angegeben.

Es wird ein Verfahren zur Kommunikation von mit einem Smart Meter erfassten energieverbrauchsspezifischen Messdatenelementen von einer Smart Meter Vorrichtung an ein erstes Computersystem eines Energieversorgers und/oder Messstellenbetreibers vorgeschlagen, wobei die Vorrichtung ein Sicherheitsmodul aufweist, wobei das Sicherheitsmodul eine Kennung aufweist, welche das Sicherheitsmodul eindeutig identifiziert, und wobei das Sicherheitsmodul als einzige Kommunikationsschnittstelle der Vorrichtung mit dem ersten Computersystem dient, wobei die Vorrichtung für ihren Betrieb notwendige Konfigurationsdaten aufweist, wobei der Vorrichtung eine Angabe derjenigen Messdatenelemente und/oder Konfigurationsdaten zugeordnet ist, für welche das erste Computersystem für einen Lesezugriff berechtigt ist. Das Verfahren umfasst zunächst den Aufbau eines ersten Kommunikationskanals zwischen dem ersten Computersystem und dem Sicherheitsmodul. Dem folgt eine vorzugsweise direkte gegenseitige Authentifizierung des Computersystems und des Sicherheitsmoduls, wobei die Authentifizierung mit Hilfe eines ersten Zertifikats des Sicherheitsmoduls und mit Hilfe eines zweiten Zertifikats des ersten Computersystems erfolgt. Unter dem Begriff der "direkten gegenseitigen Authentifizierung" wird dabei verstanden, dass ein zweites Computersystem hierzu nicht involviert sein muss, um z.B als vermittelnde Einrichtung zwischen dem Sicherheitsmodul und dem ersten Computersystem Authentifizierungsmaßnahmen durchzuführen. Insbesondere schließt dies aus, dass das erste Computersystem und/oder das Sicherheitsmodul ein zweites Computersystem benötigen, um überhaupt Authentifizierungsmaßnahmen durchführen zu können. So ist ein zweites Computersystem zur Überprüfung der Echtheit von Zertifikaten, von Rechten zur Kommunikation oder zu Identitätsüberprüfungen nicht notwendig.

Im letzten Schritt erfolgt nach erfolgreicher gegenseitiger Authentifizierung ein Übermitteln zumindest eines Teils der in der Angabe spezifizierten Messdatenelemente und/oder Konfigurationsdaten über das Sicherheitsmodul an das erste Computersystem durch eine gesicherte Übertragung.

Unter Konfigurationsdaten werden dabei jegliche Arten von Daten verstanden, welche den Betrieb der Vorrichtung oder der der Vorrichtung zugeordneten Smart Meter konfigurieren. Dies umfasst auch die Konfiguration der Art und Weise einer Energie-Messdatenerfassung mittels der Messdatenelemente wie z.B. die Taktung der Messdatenerfassung, Messdatenauswertung, Messdatenaggregation, Messdatenumwandlung, sowie standortspezifische Daten für die Vorrichtung oder der Vorrichtung zugeordnete Smart Meter.

Unter "Messdatenelemente" wird jegliche Art von Daten verstanden, welche aus einer Energieverbrauchsmessung mit einem Smart Meter resultieren. Dies umfasst z.B. einen Zeitpunkt der Erfassung von Messdaten der Energieverbrauchsmessung, einzelne Messdatenpunkte zum jeweiligen Zeitpunkt und Informationen über das Zustandekommen der Messdaten wie zum Beispiel Stromstärke, Spannung, Wasserdruck, Wassertemperatur oder Gasdruck.

Ausführungsformen der Erfindung können den Vorteil haben, dass durch die Bereitstellung des beschriebenen Berechtigungskonzepts in Form der Angaben spezifisch für jeden Energieversorger und/oder Messstellenbetreiber im Voraus festgelegt werden kann, welche Messdatenelemente und/oder Konfigurationsdaten überhaupt durch diesen Energieversorger und/oder Messstellenbetreiber ausgelesen oder erfasst werden dürfen. Dadurch ist ein Datenschutz in hohem Maß gewährleistet. Erfindungsgemäß weist die Vorrichtung einen Speicherbereich auf, wobei in dem Speicherbereich ein erster Teil der Angabe gespeichert ist.

Erfindungsgemäß umfasst das Verfahren ferner zur Initialisierung den Aufbau eines zweiten Kommunikationskanals zwischen dem ersten Computersystem und einem zweiten Computersystem, wobei das erste Computersystem und das zweite Computersystem einem über ein Netzwerk verbundenen Satz von Computersystemen zugeordnet ist. Es folgt eine Authentifizierung des ersten Computersystems gegenüber dem zweiten Computersystem. Nach erfolgreicher Authentifizierung des ersten Computersystems gegenüber dem zweiten Computersystem werden Daten, sowie die Kennung des Sicherheitsmoduls von dem ersten Computersystem durch das zweite Computersystem durch eine gesicherte Übertragung empfangen. Mit Empfang der Kennung ist das zweite Computersystem in der Lage, die Vorrichtung eindeutig zu adressieren. Ferner folgt ein Aufbau eines dritten Kommunikationskanals zwischen dem zweiten Computersystem und dem Sicherheitsmodul. Es folgt eine Authentifizierung des zweiten Computersystems gegenüber dem Sicherheitsmodul, wobei die Initialisierung der Ermöglichung einer Kommunikation des Sicherheitsmoduls mit dem ersten Computersystem dient, wobei vor der Initialisierung des Speicherbereichs ausschließlich für das zweite Computersystem des Satzes von Computersystemen eine erfolgreiche Authentifizierung gegenüber dem Sicherheitsmodul möglich ist. Nach erfolgreicher Authentifizierung des zweiten Computersystems gegenüber dem Sicherheitsmodul erfolgt ein Empfang von Daten von dem zweiten Computersystem durch das Sicherheitsmodul durch eine gesicherte Übertragung und Speicherung der Daten in dem Speicherbereich zur Initialisierung des Speicherbereichs, wobei erst aufgrund der gespeicherten Daten die Kommunikation des ersten Computersystems und dem Sicherheitsmodul unter Umgehung des zweiten Computersystems ermöglicht wird. Zuvor ist eine Kommunikation des Sicherheitsmoduls und damit der Vorrichtung mit dem ersten Computersystem weder direkt, noch indirekt überhaupt möglich.

Ausführungsformen der Erfindung könnten den Vorteil haben, dass durch den Initialisierungsvorgang in sicherer, eindeutiger und nachvollziehbarer Weise eine Möglichkeit bereitgestellt werden kann, welche eine sichere Kommunikation zwischen dem Smart-Meter und einem autorisierten Marktteilnehmer wie einem Energieversorger oder einem Messstellenbetreiber ermöglicht. Vorzugsweise handelt es sich dabei bei dem zweiten Computersystem um ein Computersystem einer vertrauenswürdigen Instanz, welche auch als "Trusted Service Manager" oder "TSM" bezeichnet wird.

Vorzugsweise ist hierfür das Sicherheitsmodul beispielsweise in seinem Auslieferungszustand so konfiguriert, dass ausschließlich diese vertrauenswürdige Instanz in der Lage ist, eine Kommunikation nach erfolgreicher Authentifizierung mit dem Sicherheitsmodul durchzuführen. Dadurch ist gewährleistet, dass insbesondere eine entgeltrelevante Konfiguration des Smart-Meterings nur einer solchen Stelle überlassen wird, welche sowohl von den autorisierten Markteilnehmern, das heißt zum Beispiel den Messstellenbetreibern und/oder den eigentlichen Energieversorgern, als auch den Endverbrauchern als vertrauenswürdig eingestuft ist. Unter "entgeltrelevante Konfiguration" wird im Folgenden verstanden, dass durch diese Konfiguration bezüglich eines Smart-Meters festgelegt wird, wer zum Beispiel wie zur Abrechnung der durch das Smart-Meter erfassten Energiemengen berechtigt ist. Ferner kann dadurch auch festgelegt werden, welche Personen wie Endverbraucher und autorisierte Marktteilnehmer in welchem Umfang auf die Funktionen und bezüglich des Smart Meters verfügbaren Informationen überhaupt Zugriff haben dürfen. Da diese Festlegung von Seitens einer vertrauenswürdigen Stelle erfolgt, ist dadurch gewährleistet, dass ein Missbrauch dieser Funktionen und Informationen durch unbefugte Dritte ausgeschlossen ist. Die Informationen können dabei z.B. Standortinformationen des Smart Meters, durch das Smart Meter gemessene Werte, Standortinformationen des Speicherbereichs oder jegliche im Speicherbereich enthaltene Werte umfassen.

Durch die Speicherung der empfangenen Daten in dem Speicherbereich zur Initialisierung des Speicherbereichs können somit bezüglich einem oder mehrerer diesem Speicherbereich zugeordneter Smart-Meter z.B. festgelegt werden, an wen zum Beispiel erfasste Energiemengen gemeldet werden, wie die Energiemengen zeitlich gesehen zu erfassen sind, welche Informationen oder "Attribute" ein autorisierter Marktteilnehmer bezüglich des Smart-Meters erfassen und/oder abfragen darf. Ferner kann dadurch auch festgelegt werden, inwieweit ein zum Beispiel Endverbraucher Zugriff auf die Informationen hat, welche bezüglich des Smart-Meters entweder im Smart-Meter selber oder an einer dem Smart-Meter zugeordneten Vorrichtung oder dem Sicherheitsmodul hinterlegt sind.

Ausführungsformen der Erfindung sind also insgesamt besonders vorteilhaft, da ein besonders hohes Maß an Vertrauenswürdigkeit hinsichtlich der bezüglich der Vorrichtung hinterlegten Daten "Konfigurationsdaten" als auch hinsichtlich des Datenschutzes der von durch der Vorrichtung zugeordneten Smart-Metern erfassten Messdatenelemente sowohl für Endverbraucher als auch für Messstellenbetreiber und Energieversorger gewährleistet ist.

Durch die genannten Verfahrensschritte wird sichergestellt, dass ausschließlich dann Messdatenelemente und/oder Konfigurationsdaten zwischen dem zweiten Computersystem des Energieversorgers oder Messstellenbetreibers und dem Sicherheitsmodul übertragen werden, wenn sowohl Energieversorger oder Messstellenbetreiber und Endverbraucher an einer solchen Datenübertragung überhaupt interessiert sind und wenn beide Seiten in eine solche Datenübertragung zuvor eingewilligt haben. Nur dann wird der besagte Speicherbereich mit den Berechtigungs-Angaben für das erste Computersystem durch die vertrauenswürdige Instanz versehen sein. Da die Instanz des zweiten Computersystems ja vertrauenswürdig ist, können Endverbraucher davon ausgehen, dass für ihre Vorrichtung ohne Einwilligung keine ungewollte Freischaltung von ersten Computersystemen durch entsprechende Hinterlegung der besagten Angaben in dem Speicherbereich erfolgt.

Es sei angemerkt, dass im Rahmen der gesamten Beschreibung vorzugsweise sämtliche Zertifikate durch den Betreiber des zweiten Computersystems ausgestellt sein sollten. Auch dadurch wird die Sicherung der Vertrauenswürdigkeit sowohl von erstem und zweiten Computersystem, als auch des Sicherheitsmoduls gewährleistet.

Erfindungsgemäß umfassen die gespeicherten Daten den ersten Teil der Angabe und eine Energieerfassungsanwendung, wobei es sich bei dem zweiten Computersystem um ein Computersystem einer vertrauenswürdigen Instanz handelt, wobei die Initialisierung dadurch angestoßen wird, dass eine Übermittlung der Kennung des Sicherheitsmoduls an das erste Computersystem erfolgt. Eine Akzeptanz eines obig beschriebenen Datenschutzkonzepts ist somit insbesondere dadurch gegeben, dass die Zugriffsberechtigungen, d.h. die Angabe durch die vertrauenswürdige Stelle, nämlich das zweite Computersystem autorisiert wird.

Nach einer Ausführungsform der Erfindung erfolgt die gesicherte Übertragung durch eine Ende-zu-Ende-Verschlüsselung zwischen dem zweiten Computersystem und dem Sicherheitsmodul. Dies ermöglicht es, die Verbindung zwischen dem Sicherheitsmodul und dem zweiten Computersystem über beliebige Netzwerke aufzubauen, da aufgrund der Ende-zu-Ende-Verschlüsselung keine Änderungen der über die Verbindung übertragenen Daten durch Dritte vorgenommen werden können. Allgemein kann die Erfindung dadurch realisiert werden, dass die gesamte Kommunikation zwischen dem zweiten Computersystem und dem Sicherheitsmodul über beliebige Arten von Netzwerken erfolgen kann. Dies umfasst eine Kommunikation über das Internet, eine Kommunikation durch drahtlose Netzwerkverbindungen wie beispielsweise Mobilfunk, als auch eine Kommunikation unter Verwendung einer Trägerfrequenzanlage. Letztere ist auch unter dem Namen: "Powerline Datenübertragung" bekannt und umfasst Vorrichtungen zur Datenübertragung über vorhandene Stromnetze. Vorzugsweise findet diese Ende-zu-Ende Verschlüsselung auch für die Kommunikation zwischen erstem Computersystem und Sicherheitsmodul statt.

Nach einer weiteren Ausführungsform der Erfindung erfolgt die Authentifizierung des ersten Computersystems gegenüber dem Sicherheitsmodul mit Hilfe eines dritten Zertifikats des zweiten Computersystems. Das Sicherheitsmodul kann dann anhand dieses Zertifikats überprüfen, ob das zweite Computersystem die erforderliche Berechtigung für einen Schreibzugriff auf den Speicherbereich hat, bevor ein solcher Schreibzugriff durch das zweite Computersystem durchgeführt werden kann.

Nach einer Ausführungsform der Erfindung ist vor der Initialisierung des Speicherbereichs ausschließlich bei Vorliegen des dritten Zertifikats die erfolgreiche Authentifizierung gegenüber dem Sicherheitsmodul möglich. Damit ist sichergestellt, dass grundsätzlich nur die vertrauenswürdige Stelle in Form des zweiten Computersystems zur Inbetriebnahme der Vorrichtung in der Lage ist. Damit werden Manipulationen oder gar Ausspähversuche der Vorrichtung unterbunden - ohne initiale Verwendung des zweiten Computersystems und damit einer Einrichtung, welcher alle Teilnehmer vertrauen, ist eine Kommunikation mit der Vorrichtung bzw. dem Sicherheitsmodul nicht möglich. Vorzugsweise wird erst durch die Speicherung der Daten in dem Speicherbereich zur Initialisierung des Speicherbereichs das Sicherheitsmodul für eine Kommunikation mit dem ersten Computersystem freigeschaltet, wobei durch die in dem Speicherbereich gespeicherten Daten selbst die Kommunikation mit dem ersten Computersystem freigeschaltet wird. Vor der Initialisierung des Speicherbereichs ist somit ausschließlich für das zweite Computersystem des Satzes von Computersystemen ein Zugriff auf den Speicherbereich möglich.

Nach einer Ausführungsform der Erfindung umfasst die Authentifizierung ein Challenge-Response-Verfahren. Z.B. kann ein kryptografisches Protokoll, beispielsweise basierend auf einem symmetrischen Schlüssel oder einem asymmetrischen Schlüsselpaar zum Einsatz kommen, um eine Authentifizierung des ersten bzw. zweiten Computersystems gegenüber dem Sicherheitsmodul vorzunehmen.

Nach einer Ausführungsform der Erfindung ist ein zweiter Teil der Angabe in dem zweiten Zertifikat enthalten. Eine Akzeptanz eines solchen Datenschutzkonzepts ist hier insbesondere dadurch gegeben, dass also die Angaben, d.h. die Berechtigunggen zusätzlich oder alternativ in einem amtlichen Dokument, nämlich einem Zertifikat, enthalten sind. Da das Zertifikat fälschungssicher ist und dessen Echtheit ohne Weiteres durch den Endverbraucher überprüft werden kann wird auch dadurch ein besonders hohes Maß an Vertrauenswürdigkeit hinsichtlich der spezifizierten Angaben ermöglicht. Vorzugsweise ist wiederum das zweite Zertifikat durch das zweite Computersystem signiert.

Nach einer Ausführungsform der Erfindung erfolgt der Aufbau des ersten Kommunikationskanals durch das Sicherheitsmodul, wobei die Übermittlung des Teils der in der Angabe spezifizierten Messdatenelemente und/oder Konfigurationsdaten durch ein Push-Verfahren erfolgt. Dadurch ist es also möglich, dass beispielsweise in zusätzlich in der Angabe oder allgemein bei der Initialisierung des Speicherbereichs festgelegten zeitlichen Abständen das Sicherheitsmodul den ersten Kommunikationskanal aufbaut, um dadurch in diesen zeitlichen Abständen zum Beispiel Energieverbrauchswerte an das erste Computersystem zu übermitteln. Möglich ist dabei auch zum Beispiel, dass der erste Kommunikationskanal nur unter bestimmten bei Initialisierung des Speicherbereichs festgelegten Bedingungen aufgebaut wird. Solche Bedingungen können zum Beispiel eine Aggregation der erfassten Energiemengen oberhalb eines vorbestimmten Schwellwertes umfassen.

Nach einer weiteren Ausführungsform der Erfindung umfassen die von dem zweiten Computersystem empfangenen Daten eine Energieerfassungsanwendung, wobei die Energieerfassungsanwendung mit den Daten von dem zweiten Computersystem durch das Sicherheitsmodul empfangen wurde. Dadurch ist es möglich, bei der Initialisierung des Speicherbereichs durch das zweite Computersystem eine Energieerfassungsanwendung bereitzustellen, welche in durch beispielsweise den Messstellenbetreiber oder den Energieversorger zuvor spezifizierter Weise eine Energieerfassung und/oder Energieabrechnung ermöglichen. Außerdem könnte durch eine solche Energieerfassungsanwendung festgelegt werden, wie eine Energieerfassung zu erfolgen hat. Diese kann beispielsweise eine sekundengenaue Abrechnung oder aber eine Abrechnung mit aggregiertem Energieverbrauch über einen vorbestimmten Zeitraum erfassen. Ferner kann die Energieerfassungsanwendung auch eine Schnittstelle bereitstellen, über welcher ein Endverbraucher in vordefinierter Weise eine Überwachung seines Energieverbrauchs selbst vornehmen kann.

Es sei an dieser Stelle angemerkt, dass die Erfindung vorteilhaft ist, da der Speicherbereich und das Sicherheitsmodul in einem Smart-Meter-Gateway enthalten sind. In diesem Fall ist z.B. möglich, den Smart-Meter-Gateway mit verschiedenen Smart-Metern zu koppeln, sodass bei einem Initialisierungsvorgang spezifische Energieerfassungsanwendungen und/oder Konfigurationsdaten für jeden Smart-Meter und gegebenenfalls pro Smart-Meter für verschiedene Energieversorger oder Messstellenbetreiber bereitgestellt werden können. Dies umfasst auch die erneute Verwendung der Verfahrensschritte zur Initialisierung des Speicherbereichs bezüglich eines Updates des Inhalts des Speicherbereichs, beispielsweise aufgrund einer Aktualisierung einer Energieerfassungsanwendung. Ferner umfasst dies die Möglichkeit des späteren Hinzufügens von einer oder weiterer Energieerfassungsanwendungen zu dem Speicherbereich. Dadurch ist durch die Bereitstellung eines einzelnen Gateways eine nahezu unbegrenzte Erweiterungsfähigkeit mit einer Vielzahl verschiedener Smart-Meter und die Möglichkeit einer Zugriffskontrolle auf den Gateway für eine Vielzahl von verschiedenen Energieversorgern und/oder Messstellenbetreibern möglich. Dies ist insbesondere im Hinblick auf die Verwendung beispielsweise in Mehrfamilienhäusern relevant, in welchen verschiedene Teilnehmer zu verschiedenen Uhrzeiten und Wochentagen verschiedene Energieversorger oder Messstellenbetreiber zur Energieabrechnung und -versorgung bestimmt haben.

Die bezüglich der Energieerfassungsanwendung beschriebene Vorgehensweise kann alternativ oder zusätzlich analog auch bezüglich der Konfigurationsdaten und/oder der Berechtigungs-Angaben selbst vorgenommen werden. Dies umfasst also z.B. ein Update der Konfigurationsdaten durch das zweite Computersystem und das Hinzufügen neuer Konfigurationsdaten durch das zweite Computersystem, sowie eine Änderung des Berechtigungskonzepts durch das zweite Computersystem. Gesichert werden sollte, dass ausschließlich das zweite Computersystem eine Veränderung, Aktualisierung oder Löschung der Angaben vornehmen darf.

Nach einer weiteren Ausführungsform der Erfindung initiiert die Energieerfassungsanwendung den Aufbau des ersten Kommunikationskanals. Wie bereits oben erwähnt ist es damit möglich, insbesondere in zuvor festgelegten Zeitabständen, eine Meldung der erfassten Energiemengen an den Energieversorger und/oder Messstellenbetreiber zu senden. Dies erspart also dem Energieversorger oder Messstelienbetreiber die Notwendigkeit, eine zeitlich sinnvolle Abfrage des erfassten Energieverbrauchs vorzunehmen. Wird beispielsweise der Energieverbrauch nur dann an das erste Computersystem gemeldet, wenn ein Mindest-Energieverbrauch überschritten wird, erspart sich somit das erste Computersystem eine unter Umständen überflüssige Abfrage, weil der Gesamtenergieverbrauch noch nicht diesen Schwellwert überschritten hat. Nichtsdestotrotz ist es selbstverständlich möglich, in regelmäßigen Abständen, zum Beispiel bei Erstellung einer Endabrechnung, von Seitens des ersten Computersystems eine Kommunikation mit dem Sicherheitsmodul aufzubauen und damit die Messdatenelemente von dem Sicherheitsmodul an das erste Computersystem zu übertragen.

Bei der Vorrichtung handelt es sich um einen Smart Meter oder um einen Smart Meter Gateway. Im Falle eines Gateways ist diesem Gateway wiederum mindestens ein weiterer Smart Meter zugeordnet. Das Sicherheitsmodul ist jedoch im Gateway enthalten.

Der Speicherbereich und das Sicherheitsmodul sind in einem Smart-Meter-Gateway enthalten, wobei das Smart-Meter an dem Smart-Meter-Gateway ankoppelbar ist. Möglich ist beispielsweise, dass das Smart-Meter und der Smart-Meter-Gateway über eine drahtlose und/oder drahtgebundene Kommunikationsverbindung miteinander gekoppelt sind.

In allen Fällen dient der Speicherbereich unter anderem dazu, solche Daten wie Zertifikate und kryptografische Schlüssel dauerhaft zu speichern, welche einen zuverlässigen und sicheren Datenaustausch zwischen den die Smart-Meter betreibenden Endkunden und den diesen Smart-Metern zugeordneten Energieversorgern oder Messstellenbetreibern geschützt gewährleisten.

Da der Speicherbereich in dem Smart-Meter-Gateway enthalten ist, ergibt sich der Vorteil, dass eine einzelne zentrale Einheit vorgesehen werden kann, welche für beliebige Kommunikationen mit außerhalb des Netzwerks Smart-Meter-Smart-Meter-Gateway befindlichen Teilnehmern ein einzelnes zentrales Kommunikations-Interface bereitstellt..

Nach einer Ausführungsform der Erfindung hat das Sicherheitsmodul die Form einer Chipkarte. Beispielsweise könnte das Sicherheitsmodul in Form einer Chipkarte durch den Betreiber des zweiten Computersystems vorkonfiguriert werden, indem auf der Chipkarte diejenige Informationen gespeichert werden, welche es ermöglichen, eine Authentifizierung des zweiten Computersystems gegenüber dem Sicherheitsmodul zur späteren Durchführung des Initialisierungsvorgangs zu ermöglichen.

Nach einer Ausführungsform der Erfindung handelt es sich bei dem zweiten Computersystem um ein behördlich zertifiziertes Trustcenter.

Das Sicherheitsmodul weist eine eindeutige Kennung auf, wobei bei der Übermittelung des zumindest einen Teils der in der Angabe spezifizierten Messdatenelemente und/oder Konfigurationsdaten die Kennung durch das Sicherheitsmodul der Übermittelung hinzugefügt wird. Dies könnte den Vorteil haben, dass für das erste Computersystem zweifelsfrei feststellbar ist, dass die empfangenen Messdatenelemente und/oder Konfigurationsdaten auch tatsächlich von der Vorrichtung stammen. Das Sicherheitsmodul könnte zudem noch die Kennung mit seinem privaten Schlüssel signieren, so dass eine hohe Fälschungssicherheit gegeben ist.

Nach einer Ausführungsform der Erfindung handelt es sich bei der Kennung des Sicherheitsmoduls um einen öffentlichen Schlüssel des Sicherheitsmoduls oder eine IPv6-Adresse des Sicherheitsmoduls. Die Verwendung des öffentlichen Schlüssels des Sicherheitsmoduls als Kennung des Sicherheitsmoduls hat den Vorteil, dass dadurch ein GUID (Globally Unique Identifier) bereitgestellt werden kann, welcher mit nahezu absolut sicherer Wahrscheinlichkeit eindeutig ist. Im Falle der Verwendung der GUID in Form des öffentlichen Schlüssels könnte die Eindeutigkeit durch einfache Vergabe eines möglichst langen öffentlichen Schlüssels gewährleistet werden. Im Falle dessen es sich bei der Kennung des Sicherheitsmoduls um eine IPv6-Adresse handelt, wäre es in einfacher Weise möglich, über bestehende Netzwerke eine eindeutige Adressierung des Sicherheitsmoduls vorzunehmen.

Nach einer weiteren Ausführungsform der Erfindung beinhalten das erste Zertifikat den öffentlichen Schlüssel des Sicherheitsmoduls. Dieser öffentliche Schlüssel ist dabei einem privaten Schlüssel zugeordnet, welcher in einem geschützten Speicherbereich im Sicherheitsmodul gespeichert ist. Das Zertifikat kann nach einem Public Key Infrastructure (PKI)-Standard erstellt worden sein, beispielsweise nach dem X.509-Standard.

An dieser Stelle sei angemerkt, dass die beschriebenen Zertifikate (erstes, zweites und drittes Zertifikat) nicht zwangsläufig in einem Speicher der hierfür vorgesehenen Vorrichtung (Sicherheitsmodul, erstes Computersystem, zweites Computersystem) gespeichert sein müssen. Alternativ oder zusätzlich ist es auch möglich, dass die Zertifikate auf einem öffentlichen Verzeichnisserver abgespeichert sind.

Nach einer Ausführungsform der Erfindung ist das Sicherheitsmodul untrennbar mit der Vorrichtung verbunden. Unter "untrennbar" wird dabei eine dauerhafte Verknüpfung von Sicherheitsmodul und Vorrichtung verstanden, welche eine Funktionsfähigkeit des Sicherheitsmoduls gewährleistet. Sobald versucht wird, das Sicherheitsmodul von der Vorrichtung zu entfernen, geht das Sicherheitsmodul in einen unbrauchbaren, d.h. funktionsunfähigen Zustand über. Dies kann entweder durch eine elektronische Selbstzerstörung, Selbstdeaktivierung oder eine physikalische Zerstörung oder Deaktivierung des Sicherheitsmoduls gewährleistet sein. Im einfachsten Fall könnte das Sicherheitsmodul in einem Gehäuse der Vorrichtung eingegossen sein, sodass aufgrund des "Aufbrechens" dieser Gussverbindung die Zerstörung des Sicherheitsmoduls resultiert.

Vorzugsweise wird aufgrund des Verbindens des Sicherheitsmoduls mit der Vorrichtung ein Verknüpfungsprozess auf der Vorrichtung und vorzugweise auch auf den der Vorrichtung zugeordneten Smart-Meters gestartet, wobei durch den Verknüpfungsprozess eine untrennbare logische Verknüpfung zwischen dem Sicherheitsmodul und der Vorrichtung und den Smart-Meters hergestellt wird. Zum Beispiel umfasst diese untrennbare logische Verknüpfung einen irreversiblen Kopiervorgang des ersten Zertifikats oder der Kennung des Sicherheitsmoduls auf dem Speicherbereich.

In einem weiteren Aspekt betrifft die Erfindung ein Computerprogrammprodukt mit von einem Prozessor ausführbaren Instruktionen zur Durchführung der oben beschriebenen Verfahrensschritte.

Im Folgenden werden bevorzugte Ausführungsformen der Erfindung anhand der Zeichnungen näher erläutert. Es zeigen:
- Figur 1: ein Blockdiagramm eines Systems zur Implementierung des obig beschriebenen Verfahrens,
- Figur 2: ein Flussdiagramm einer Ausführungsform eines Verfahrens zur Initialisierung eines Speicherbereichs,
- Figur 3: ein Flussdiagramm eines Verfahrens zum Empfangen bzw. Abrufen von Messdatenelementen,

Im Folgenden werden einander ähnliche Elemente mit gleichen Bezugszeichen gekennzeichnet.

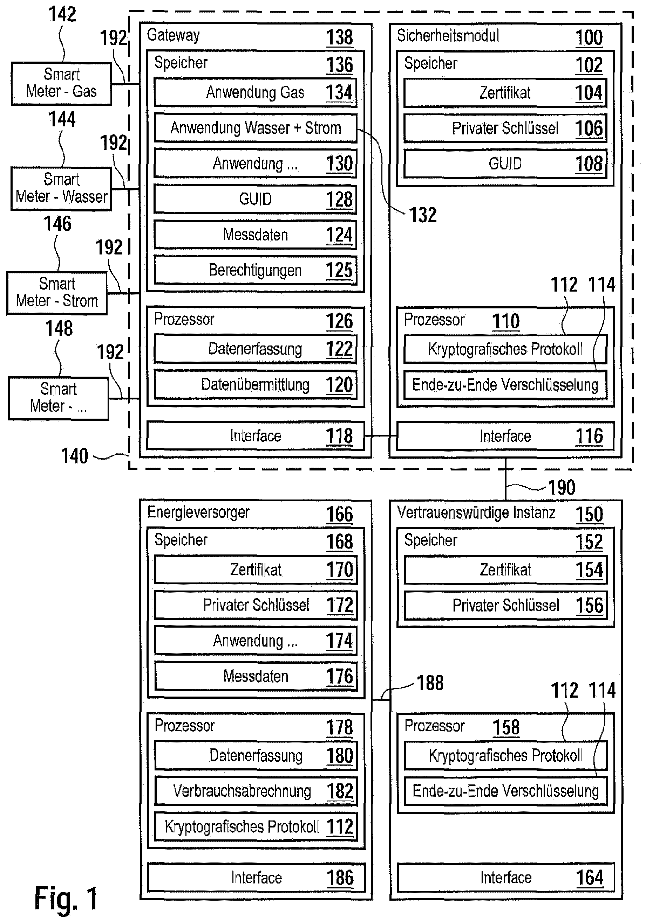

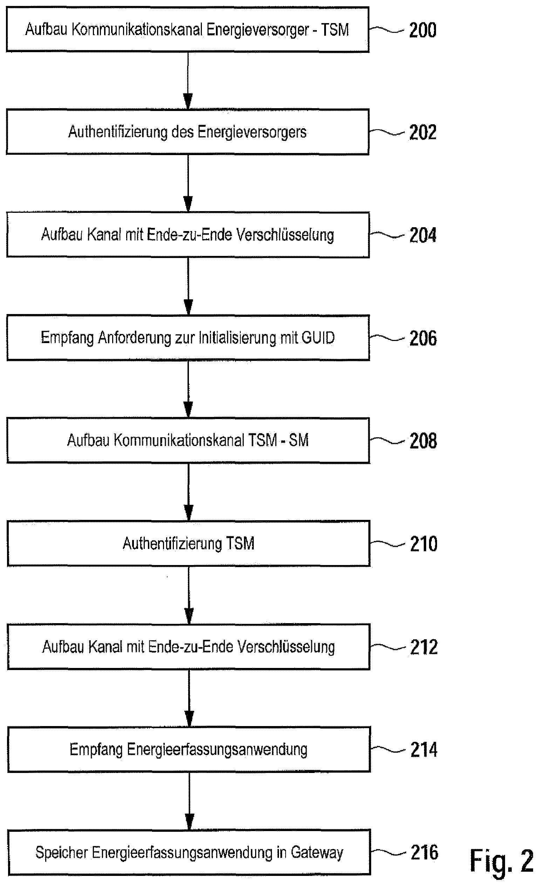

Die Figur 1 zeigt ein Blockdiagramm eines Gesamtsystems zur Initialisierung eines Speicherbereichs. Zusammen mit den in Figur 2 gezeigten Verfahrensschritten zur Initialisierung eines Speicherbereichs soll im Folgenden ohne der Beschränkung der Allgemeinheit gezeigt werden, wie ein Speicherbereich 136 eines Gateways 138, welcher einer Vielzahl von Smart-Metern 142, 144, 146, 148 zugeordnet ist, initialisiert werden kann.

Die Smart-Meter 142 - 148 dienen dabei der Erfassung verschiedener Energieverbrauchswerte bezüglich zum Beispiel Gas (Smart-Meter 142), Wasser (Smart-Meter 144), Strom (Smart-Meter 146) und weiteren nicht näher spezifizierten Energieformen (Smart-Meter 148). Die Smart-Meter sind dabei über entsprechende Kommunikationsverbindungen 192 mit dem Interface 118 des Gateways 138 verbunden.

Es sei davon ausgegangen, dass ein Sicherheitsmodul 100 fest und untrennbar mit dem Gateway 138 verbunden ist, sodass insgesamt durch die Kombination des Gateways 138 und des Sicherheitsmoduls 100 eine untrennbare Einheit 140 gegeben ist. Der Gateway 138 und das Sicherheitsmodul 100 kommunizieren über jeweilige Interfaces 118 bzw. 116 miteinander. Über das Interface 116 findet ferner eine Kommunikation mit autorisierten Markteilnehmern und dritten Personen bzw. Instanzen statt, welche nicht innerhalb des durch die Einheit 140 und den Smart-Metern 142 - 148 gebildeten Netzwerks befindlich sind. Die Kommunikation zwischen Interface 116 des Sicherheitsmoduls 100 und weiteren Kommunikationsteilnehmern erfolgt dabei über eine Kommunikationsverbindung 190. Hierbei kann es sich beispielsweise um eine Powerline-Verbindung oder eine Kommunikationsverbindung über ein mobiles Telekommunikationsnetz oder das Internet handeln.

Das Sicherheitsmodul 100 hat einen elektronischen Speicher 102 mit geschütztem Speicherbereich 106 und 108. Der geschützte Speicherbereich 106 dient zur Speicherung eines privaten Schlüssels des Sicherheitsmoduls 100 und der Speicherbereich 108 dient zur Speicherung einer Kennung des Sicherheitsmoduls "GUID" (Globally Unique Identifier). Bei dem GUID kann es sich beispielsweise um eine IPv6-Adresse des Sicherheitsmoduls 100 handeln.

Der elektronische Speicher 102 kann ferner einen Speicherbereich 104 zur Speicherung eines Zertifikats aufweisen. Das Zertifikat beinhaltet einen öffentlichen Schlüssel, der dem in dem geschützten Speicherbereich 106 gespeicherten privaten Schlüssel zugeordnet ist. Das Zertifikat kann nach einem Public Key Infrastructure (PKI)-Standard erstellt worden sein, beispielsweise nach dem X.509-Standard.

Das Zertifikat muss nicht zwangsläufig mit dem elektronischen Speicher 102 des Sicherheitsmoduls 100 gespeichert sein. Alternativ oder zusätzlich kann das Zertifikat auch in einem öffentlichen Verzeichnisserver gespeichert sein.

Das Sicherheitsmodul 100 hat einen Prozessor 110 zur Ausführung von Programminstruktionen 112 und 114. Durch Ausführung der Programminstruktionen 112 "kryptografisches Protokoll" wird beispielsweise eine Authentifizierung einer vertrauenswürdigen Instanz 150 oder eines Energieversorgers 166 gegenüber dem Sicherheitsmodul 100 ermöglicht. Bei dem kryptografischen Protokoll kann es sich beispielsweise um ein Challenge-Response-Protokoll basierend auf einem symmetrischen Schlüssel oder einem asymmetrischen Schlüsselpaar handeln.

Möglich ist natürlich auch eine gegenseitige Authentifizierung von Sicherheitsmodul und vertrauenswürdiger Instanz bzw. Energieversorger.

Die Programminstruktionen 114 dienen zur Ende-zu-Ende-Verschlüsselung von zwischen dem Sicherheitsmodul 100 und der vertrauenswürdigen Instanz 150 bzw. dem Energieversorger 166 zu übertragenden Daten. Für die Ende-zu-Ende-Verschlüsselung kann ein symmetrischer Schlüssel verwendet werden, der beispielsweise anlässlich der Ausführung des kryptografischen Protokolls zwischen dem Sicherheitsmodul 100 und den weiteren Teilnehmern 150 bzw. 166 vereinbart wird.

Ähnlich wie das Sicherheitsmodul 100 weist auch die vertrauenswürdige Instanz 150 einen elektronischen Speicher 152 und einen geschützten Speicherbereich 156 zur Speicherung eines privaten Schlüssels der vertrauenswürdigen Instanz auf. In dem Speicher 152 kann auch noch ein Zertifikat 154 der vertrauenswürdigen Instanz enthalten sein. Dieses Zertifikat kann jedoch ebenfalls auf einem zentralen Zertifikatserver gespeichert sein.

Ein Prozessor 158 der vertrauenswürdigen Instanz 150 weist wiederum die obig bezüglich des Sicherheitsmoduls 100 beschriebenen Programminstruktionen 112 und 114 zur Implementierung eines kryptografischen Protokolls und zur Durchführung einer Ende-zu-Ende-Verschlüsselung auf. Das kryptografische Protokoll und die Ende-zu-Ende-Verschlüsselung können zur Kommunikation über das Interface 164 mit dem Energieversorger 166 oder mit dem Sicherheitsmodul 100 verwendet werden. Das Zertifikat 154 beinhaltet wiederum einen öffentlichen Schlüssel, der dem in dem geschützten Speicherbereich 156 gespeicherten privaten Schlüssel zugeordnet ist.

Bei dem "Energieversorger" 166 handelt es sich um ein Computersystem des Energieversorgers, welches wiederum einen elektronischen Speicher 168 und einen Prozessor 178 aufweist. Ferner ist diesem Computersystem ein Interface 186 zugeordnet, über welches eine Kommunikation mit der vertrauenswürdigen Instanz 150 bzw. dem Sicherheitsmodul ermöglicht wird.

Der elektronische Speicher 168 des Energieversorgers 166 weist einen geschützten Speicherbereich 172 mit einem privaten Schlüssel auf, wobei der private Schlüssel einem öffentlichen Schlüssel zugeordnet ist, welcher in einem Zertifikat 170 ebenfalls im elektronischen Speicher 168 enthalten ist. Ferner ist im Speicher 168 ein Speicherbereich für eine oder mehrere Anwendungen vorgesehen, wobei diese Anwendungen beispielsweise eine entgeltrelevante Konfiguration des Gateways 138 ermöglichen. Ebenfalls im elektronischen Speicher 168 können Messdaten 176 gespeichert sein, welche zuvor von dem Gateway 138 empfangen wurden.

Der Prozessor 178 weist Programminstruktionen 180 zur Erfassung der durch den Gateway 138 gelieferten Verbrauchsdaten und des Weiteren optional zur Ausführung von Verfahrensschritten zur Verbrauchsabrechnung in Abhängigkeit von den ermittelten Messdaten (Programminstruktionen 182) auf. Die Programminstruktionen zur Ausführung von Schritten eines kryptografischen Protokolls 112 sowie nicht gezeigte Programminstruktionen zur Durchführung einer Ende-zu-Ende-Verschlüsselung können ebenfalls vorgesehen sein, wobei durch diese Programminstruktionen eine sichere Kommunikation mit der vertrauenswürdigen Instanz 150 bzw. dem Sicherheitsmodul 100 ermöglicht wird.

Soll nun ein Neukunde dem Energieversorger 166 zugeordnet werden, könnte beispielsweise nach einer ersten Installation der Smart-Meter 142 - 148 und der Bereitstellung von Gateway 138 mit Sicherheitsmodul 102 ein Initialisierungsvorgang des Sicherheitsmoduls stattfinden. Dieser Initialisierungsvorgang könnte dadurch angestoßen werden, dass der Neukunde (ein Endverbraucher) oder eine bestimmte technische Instanz, welche die Smart-Meter installiert hatte, dem Energieversorger 166 eine entsprechende Mitteilung hierüber erstatten. Diese Mitteilung umfasst die GUID 108 des Sicherheitsmoduls 100, da dadurch eine eindeutige Identifizierung des Sicherheitsmoduls 100 gegenüber dem Energieversorger 166 möglich ist.

Nachdem der Energieversorger 166 diese Mitteilung über sein Interface 186, beispielsweise über eine Webschnittstelle einer entsprechende Webseite erhalten hat, baut der Energieversorger 166 einen Kommunikationskanal zur vertrauenswürdigen Instanz 150 auf. Dieser Schritt ist in Figur 2 mit Bezugszeichen 200 bezeichnet. Die vertrauenswürdige Instanz kann hierbei beispielsweise ein sogenannter "Trusted Service Manager TSM" sein, also eine behördlich zertifizierte Instanz, welche in elektronischen Kommunikationsprozessen die jeweilige Identität des Kommunikationspartners bescheinigt.

Nach dem Aufbau des Kommunikationskanals in Schritt 200 erfolgt eine Authentifizierung des Energieversorgers 166 im Schritt 202. Hierzu wird das Zertifikat 170 des Energieversorgers durch die vertrauenswürdige Instanz 150 überprüft. Beispielsweise kann die vertrauenswürdige Instanz 150 bei positiver Zertifikatsüberprüfung ein Challenge-Response-Verfahren durchführen, bei welchem eine Zufallszahl erzeugt wird, welche mit einem im Zertifikat 170 beinhalteten öffentlichen Schlüssel des Energieversorgers 166 verschlüsselt wird und an den Energieversorger 166 übermittelt wird. Der Energieversorger 166 kann daraufhin mit seinem privaten Schlüssel 172 die Zufallszahl entschlüsseln und im Klartext zurücksenden. Stimmt die nun von der vertrauenswürdigen Instanz 150 empfangene Zufallszahl mit der zuvor beschriebenen Zufallszahl überein, ist die Authentizität des Energieversorgers 166 tatsächlich gesichert.

Nach Durchführung des Schritts 202 und dem optionalen Challenge-Response-Verfahren kann daraufhin in Schritt 204 ein Kanal mit Ende-zu-Ende-Verschlüsselung über die Kommunikationsverbindung 188 zwischen Energieversorgung 166 und der vertrauenswürdigen Instanz 150 aufgebaut werden. Hierbei können die Programminstruktionen 114 des Prozessors 158 der vertrauenswürdigen Instanz zum Einsatz kommen.

Nach Aufbau des Kanals in Schritt 204 empfängt die vertrauenswürdige Instanz 150 in Schritt 206 eine Anforderung zum Aufspielen einer Energieerfassungsanwendung 174 des Energieversorgers 166 und dem Speicher 136 des Gateways 138. Um den Speicher 136 bzw. den Gateway 138 eindeutig zu spezifizieren, wird mit der Anforderung zur Initialisierung des Speichers 136 auch die GUID 128 des Gateways 138, welche im Speicher 136 enthalten ist, an die vertrauenswürdige Instanz übermittelt. Die GUID 128 des Speichers 136 ist identisch mit der GUID 108 des Speichers 102 des Sicherheitsmoduls 100.

Mit Empfang der GUID in Schritt 206 ist die vertrauenswürdige Instanz 150 in der Lage, eindeutig den gewünschten Gateway 138 zur Aufspielung der Anwendung 174 zu adressieren. Hierzu baut in einem nächsten Schritt 208 die vertrauenswürdige Instanz 150 über die Kommunikationsverbindung 190 einen Kommunikationskanal zum Sicherheitsmodul 100 auf. Die vertrauenswürdige Instanz 150 authentifiziert sich gegenüber dem Sicherheitsmodul 100, wobei die Authentifizierung nebst einer Überprüfung des Zertifikats 154 durch das Sicherheitsmodul beispielsweise wiederum ein Challenge-Response-Verfahren seitens des Sicherheitsmodul 100 umfasst. Hierzu könnte das Sicherheitsmodul 100 wiederum eine Zufallszahl erzeugen, mit dem öffentlichen Schlüssel der vertrauenswürdigen Instanz 150 verschlüsseln und an die vertrauenswürdige Instanz 150 senden. Die vertrauenswürdige Instanz 150 würde die verschlüsselte Zufallszahl mit ihrem privaten Schlüssel 156 entschlüsseln und die entschlüsselte Zufallszahl im Klartext zurück an das Sicherheitsmodul 100 senden. Stellt das Sicherheitsmodul fest, dass die so empfangene entschlüsselte Zufallszahl mit der ursprünglich seinerseits verschlüsselten Zufallszahl übereinstimmt, ist eine Authentifizierung der vertrauenswürdigen Instanz gegeben.

Das Verfahren setzt sich dann in Schritt 212 fort, nämlich den Aufbau eines Kommunikationskanals mit Ende-zu-Ende-Verschlüsselung zwischen der vertrauenswürdigen Instanz 150 und dem Sicherheitsmodul 100. Dies kann wiederum durch Verwendung der Programminstruktionen 114 des Prozessors 110 des Sicherheitsmoduls 100 erfolgen.

Im Schritt 214 empfängt das Sicherheitsmodul 100 die Energieerfassungsanwendung 174 von der vertrauenswürdigen Instanz.

An dieser Stelle sei angemerkt, dass es vorteilhaft sein kann, wenn beispielsweise die vertrauenswürdige Instanz die am häufigsten verschickten Energieerfassungsanwendungen in einem lokalen Speicher der vertrauenswürdigen Instanz vorrätig hält, sodass es nicht notwendig ist, bei Erschließung neuer Kunden ständig die Anwendungen 174 von dem Energieversorger 166 an die vertrauenswürdige Instanz 150 zu übertragen.

Nach Empfang der Energieerfassungsanwendung in Schritt 214 speichert das Sicherheitsmodul 100 die Anwendung in dem Speicher 136 des Gateways 138. Handelt es sich bei der Anwendung 174 beispielsweise um eine Anwendung, um Energieverbrauch bezüglich Wasser und Strom zu erfassen, so wird die Anwendung als die Anwendung 132 im Speicher 136 abgelegt. Diese Anwendung ist in der Lage, Energieverbrauchsdaten vom Smart-Meter 144 zu verarbeiten. Analog hierzu kann der Speicher 136 entsprechende Anwendungen für die Energieerfassung von Gas (134) sowie weitere Anwendungen 130 für die Erfassung weiterer Energieformen umfassen. Das Speichern der Energieerfassungsanwendung durch das Sicherheitsmodul 100 im Gateway 138 ist in Figur 2 durch den Schritt 216 gekennzeichnet.

Zusätzlich zu dem Empfang der Energieerfassungsanwendung in Schritt 214 durch das Sicherheitsmodul 100 ist es auch möglich, dass von der vertrauenswürdigen Instanz 150 separate Angaben in Form Energieversorger-spezifische Berechtigungen oder genaue Spezifizierungen von Messdatenelementen empfangen werden, welche ebenfalls in einem weiteren Bereich 125 des Speichers 136 abgelegt werden. Diese Berechtigungen oder Spezifizierungen von Messdatenelementen ermöglichen es, im Voraus festzulegen, welche Informationen der Energieversorger 166 von dem Gateway 138 überhaupt erhalten darf. Hierzu ist es beispielsweise möglich, dass vorab von der vertrauenswürdigen Instanz 150 für jeden Energieversorger spezifische Berechtigungen definiert werden, welche global für alle Energieversorger 166 gelten und welche grundsätzlich mit der Übertragung von Energieerfassungsanwendungen dem Sicherheitsmodul und damit dem Gateway 138 übermittelt werden.

Ebenfalls möglich ist es, dass Konfigurationsdaten von der vertrauenswürdigen Instanz 150 erhalten werden. Diese Konfigurationsdaten können dabei die technische Konfiguration der Smart Meter und/oder des Gateways betreffen.

Anstatt oder zusätzlich zu diesen Berechtigungen oder Spezifizierungen in Form einer separaten Angabe ist es auch möglich, diese Berechtigungen oder Spezifizierungen in der Energieerfassungsanwendung selbst zu implementieren. Die Anwendung kontrolliert also selbständig anhand ihrer Programminstruktionen, welche Daten an den Energieversorger 166 kommuniziert werden.

Mittels der Programminstruktionen zur Datenerfassung 122 des Prozessors 126 ist nun der Gateway 138 in der Lage, Messdaten bezüglich eines Energieverbrauchs beispielsweise von dem Smart-Meter 144 und dem Smart-Meter 146 zu erfassen. Die entsprechenden Messdaten werden in dem Speicherbereich 124 des Speichers 136 abgelegt. Grundsätzlich bestehen die Messdaten 124 aus verschiedenen Messdatenelementen, welche beispielsweise umfassen können: Zeitpunkt der Erfassung der Messdaten, einzelne Messdatenpunkte zum jeweiligen Zeitpunkt, Informationen über das Zustandekommen der Messdaten (zum Beispiel Stromstärke, Spannung, Wasserdruck, Wassertemperatur, Gasdruck). Die Messdaten 124 können über die Anwendungen 130, 132 und 134 einer weiteren Auswertung unterzogen werden, woraus sich ausgewertete Messdaten ergeben, welche ebenfalls als "Messdatenelemente" im Speicherbereich 124 abgelegt werden können. Beispielsweise kann es sich bei den ausgewerteten Messdaten um akkumulierte Energieverbrauchswerte handeln.

Die obig beschriebenen Berechtigungen 125 bzw. die Spezifizierungen der Messdatenelemente ermöglichen es, von vornherein festzulegen, welche dieser Messdatenelemente 124 der Energieversorger 126 überhaupt abrufen darf, bzw. welche dieser Messdatenelemente 124 an den Energieversorger 126 überhaupt übermittelt werden sollen. Ferner ermöglicht dies, von vornherein festzulegen, wie detailliert ein solches Kommunizieren erlaubt ist. Ein zu detailliertes und zeitgenaues Abrufen der Messdaten 124 könnte z.B. unerwünscht sein, da sich durch kurze Zeitintervalle von Messungen Erkenntnisse der Nutzung von elektronischen Geräten gewinnen und dadurch Benutzerprofile erstellt werden können, woran ein Endkunde jedoch gegebenenfalls kein Interesse haben könnte.

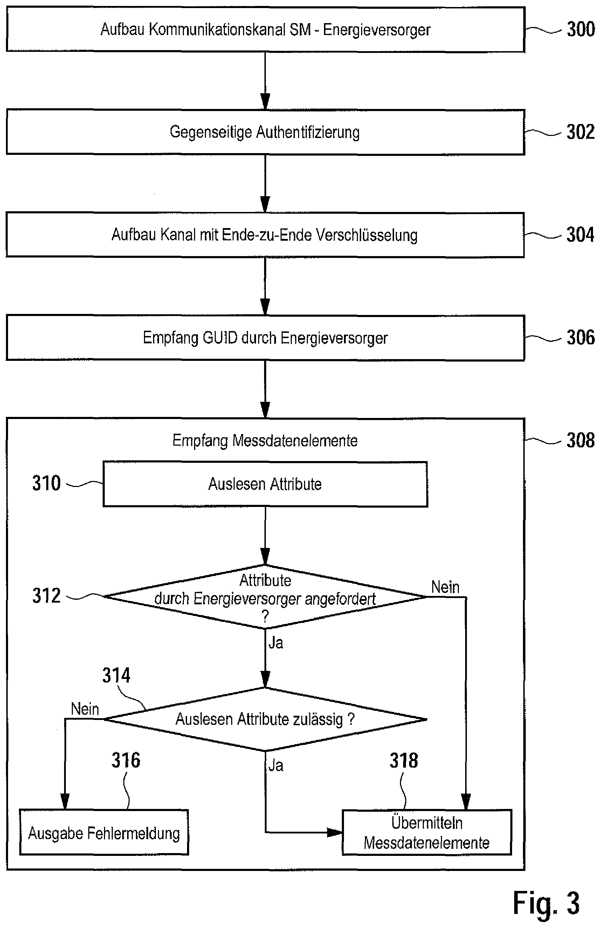

Im Hinblick auf das Flussdiagramm der Figur 3 und der Annahme, dass Messdaten 124 durch den Gateway 138 erfasst wurden, sei nun im Folgenden beschrieben, wie die Messdaten zur Endabrechnung an den Energieversorger 166 übermittelt werden können. Im Folgenden wird dabei ohne Beschränkung der Allgemeinheit davon ausgegangen, dass der Energieversorger 166 die "Ablesung", das heißt die Erfassung der im Speicher 136 enthaltenen Messdaten vornimmt. Jedoch ist es auch möglich, dass der Energieversorger 166 hierfür einen sogenannten Messstellenbetreiber beauftragt. Ein Messstellenbetreiber ist dabei ein Computersystem, welches im Auftrag des Energieversorgers 166 eine Erfassung der im Gateway 138 enthaltenen Messdaten vornimmt. Die im Folgenden beschriebenen Schritte, welche bezüglich des Energieversorgers 166 durchgeführt werden, gelten dabei analog im Falle des Ersetzens des Energieversorgers 166 durch einen entsprechenden Messstellenbetreiber.

In Schritt 300 wird seitens des Gateways 138 der Aufbau eines Kommunikationskanals mit dem Energieversorger 166 initiiert, wobei den eigentlichen Aufbau des Kommunikationskanals das Sicherheitsmodul 100 vornimmt. Hierzu kommunizierende Gateway 138 und das Sicherheitsmodul 100 über ihre jeweiligen Interfaces 118 bzw. 116. Über das Netzwerk 190, beispielsweise das Internet oder eine Powerline-Verbindung, findet in Schritt 302 eine gegenseitige Authentifizierung des Sicherheitsmoduls 100 und des Energieversorgers 166 statt. Hierzu kann wiederum eine gegenseitige Zertifikatsüberprüfung mittels der Zertifikate 104 und 170 durchgeführt werden. Zusätzlich ist es auch optional möglich, ein Challenge-Response-Verfahren zwischen Sicherheitsmodul 100 und Energieversorger 166 durchzuführen.

Die Initiierung des Aufbaus des Kommunikationskanals kann beispielsweise das Modul 120 vornehmen. Alternativ ist es möglich, das die Anwendung 130, 132 oder 134 den Aufbau des Kommunikationskanals initiiert.

Nach erfolgreicher gegenseitigen Authentifizierung erfolgt in Schritt 304 der Aufbau eines Kommunikationskanals mit Ende-zu-Ende-Verschlüsselung, vorzugsweise initiiert mittels der Programminstruktion 114 des Sicherheitsmoduls 100. Der Energieversorger 166 empfängt in Schritt 306 die GUID 108 des Sicherheitsmoduls, welche mit der GUID 128 des Gateways übereinstimmt. Anhand der GUID 108 ist der Energieversorger 166 in der Lage, die zu empfangenden Messdaten auf dem richtigen Gateway und damit dem richtigen Endverbraucher zuzuordnen. Die GUID kann durch das Sicherheitsmodul signiert sein.

In Schritt 308 erfolgt der Empfang der Messdatenelemente durch den Energieversorger 166. Schritt 308 gliedert sich dabei wiederum in eine optionale Zahl weiterer Schritte 310 bis 318 auf. So findet beispielsweise in Schritt 310 durch das Sicherheitsmodul 100 ein Auslesen der Attribute, das heißt der Berechtigungen 125 aus dem Speicher 136 statt, um festzustellen, welche Messdatenelemente überhaupt an den Energieversorger 166 übermittelt werden sollen. Die Berechtigungen können dem Sicherheitsmodul 100 durch den obig beschriebenen Initialisierungsvorgang mitgeteilt worden sein. Alternativ oder zusätzlich ist es auch möglich, dass die Berechtigungen in einem Zertifikat enthalten sind, welches von dem Energieversorger 166 durch das Sicherheitsmodul erhalten wird. Da das Zertifikat von der vertrauenswürdigen Instanz 150 erstellt wurde, ist sichergestellt, dass das Sicherheitsmodul 100 und damit der Gateway 138 den darin enthaltenen Berechtigungsangaben vertrauen kann.

Es sei angemerkt, dass hier anstatt oder zusätzlich zu den Messdatenelementen auch in analoger weise Konfigurationsdaten an den Energieversorger 166 übermittelt werden können.

Wurden mit der soeben stattfindenden gegenseitigen Kommunikation keine spezifischen Attribute durch den Energieversorger 166 angefordert, so entscheidet Schritt 312, dass pauschal ein vordefinierter Teil der durch die Attribute spezifizierten Messdatenelemente in Schritt 318 an den Energieversorger 166 übermittelt werden. Wurde hingegen im Zuge der Kommunikation ein spezielles Attribut durch den Energieversorger angefordert, folgt in Schritt 314 eine Überprüfung, ob das Auslesen eines solchen Attributs, das heißt eines entsprechenden Messdatenelements durch den Energieversorger überhaupt zulässig ist. Ist dies nicht der Fall, erfolgt im Schritt 316 ein Abbruch des Verfahrens und Ausgabe einer Fehlermeldung an den Energieversorger 166. Ist hingegen das Auslesen der Attribute zulässig, erfolgt in Schritt 318 wiederum das Übermitteln der Messdatenelemente, welche durch dieses angeforderte Attribut spezifiziert werden.

Das Anfordern spezifischer Messdatenelemente durch den Energieversorger 166 könnte dann relevant sein, wenn beispielsweise der Energieversorger über eine Vielzahl von Berechtigungen zum Auslesen von Informationen aus dem Gateway besitzt, jedoch von all seinen Berechtigungen im Zuge einer bloßen üblichen Energieverbrauchsabrechnung überhaupt keinen Gebrauch machen möchte. So könnten die spezifizierten Messdatenelemente auch Informationen über einen ordnungsgemäßen Funktionsbetrieb des Gateways oder der angeschlossenen Smart-Meter enthalten, wobei im normalen Betrieb der Energieversorger 166 überhaupt nicht an diesen eher zu diagnostischen Zwecken dienenden Informationen interessiert ist. In diesem Fall würde vom Energieversorger 166 lediglich die Daten angefordert werden, welche auch tatsächlich zu einer Energieverbrauchsabrechnung relevant sind.

Die Datenübermittlung vom Gateway 138 über das Sicherheitsmodul 100 an den Energieversorger 166 erfolgt mittels Programminstruktionen 120 des Prozessors 126.

Bezüglich Figur 3 sei noch angemerkt, dass hier davon ausgegangen wurde, dass der Aufbau des Kommunikationskanals seitens des Gateways 138 unter Verwendung des Sicherheitsmoduls erfolgte. Z.B. initiierte eine der Anwendungen 130 - 134 den Aufbau des Kommunikationskanals aufgrund, beispielsweise Ablauf eines entsprechenden Timers.

Allerdings ist es auch möglich, dass der Energieversorger 166 auf eigene Initiative eine Kommunikation mit dem Gateway 138 über das Sicherheitsmodul 100 initiiert. In diesem Fall wird also aktiv eine Abfrage der Messdaten 144 durch den Energieversorger 166 vorgenommen.

## Patentansprüche

1. Verfahren zur Kommunikation von mit einem Smart Meter (142; 144; 146; 148) erfassten energieverbrauchsspezifischen Messdatenelementen von einer Smart Meter Vorrichtung (138) an ein erstes Computersystem (166) eines Energieversorgers und/oder Messstellenbetreibers, wobei es sich bei der Vorrichtung (138) um einen Smart Meter Gateway handelt, wobei die Vorrichtung (138) ein Sicherheitsmodul (100) aufweist, wobei das Sicherheitsmodul (100) eine Kennung (108; 128) in Form einer GUID aufweist, welche das Sicherheitsmodul (100) eindeutig identifiziert und in einem Speicher (102) des Sicherheitsmodul (100) gespeichert ist, wobei eine mit der GUID (108) des Sicherheitsmoduls (100) identische GUID (128) des Smart Meter Gateways (138) in einem Speicherbereich (136) des Smart Meter Gateways (138) gespeichert ist, und wobei das Sicherheitsmodul (100) als einzige Kommunikationsschnittstelle der Vorrichtung (138) mit dem ersten Computersystem (166) dient, wobei die Vorrichtung für ihren Betrieb notwendige Konfigurationsdaten aufweist, wobei der Vorrichtung eine Angabe (125) derjenigen Messdatenelemente und/oder Konfigurationsdaten zugeordnet ist, für welche das erste Computersystem (166) für einen Lesezugriff berechtigt ist, wobei das Verfahren umfasst:
- Aufbau eines ersten Kommunikationskanals zwischen dem ersten Computersystem (166) und dem Sicherheitsmodul (100),
- Gegenseitige Authentifizierung des Computersystems (166) und des Sicherheitsmoduls (100), wobei die Authentifizierung mit Hilfe eines ersten Zertifikats (104) des Sicherheitsmoduls (100) und mit Hilfe eines zweiten Zertifikats des ersten Computersystems (166) erfolgt,
- Nach erfolgreicher gegenseitiger Authentifizierung, Übermitteln zumindest eines Teils der in der Angabe (125) spezifizierten Messdatenelemente und/oder Konfigurationsdaten über das Sicherheitsmodul (100) an das erste Computersystem (166) durch eine gesicherte Übertragung, wobei bei der Übermittelung des zumindest einen Teils der in der Angabe (125) spezifizierten Messdatenelemente und/oder Konfigurationsdaten die Kennung (108; 128) durch das Sicherheitsmodul (100) der Übermittelung hinzugefügt wird,
wobei in dem Speicherbereich (136) ein erster Teil der Angabe (125) gespeichert ist, wobei das Verfahren ferner die Schritte zur Initialisierung aufweist:
- Aufbau eines zweiten Kommunikationskanals zwischen dem ersten Computersystem (166) und einem zweiten Computersystem (150), wobei das erste Computersystem (166) und das zweite Computersystem (150) einem über ein Netzwerk verbundenen Satz von Computersystemen zugeordnet ist,
- Authentifizierung des ersten Computersystems (166) gegenüber dem zweiten Computersystem (150), wobei das zweite Zertifikat des ersten Computersystems (166) durch das zweite Computersystem (150) überprüft wird,
- Nach erfolgreicher Authentifizierung des ersten Computersystems (166) gegenüber dem zweiten Computersystem (150), Empfang von Daten, sowie der Kennung (108; 128) des Sicherheitsmoduls (100) von dem ersten Computersystem (166) durch das zweite Computersystem (150) durch eine gesicherte Übertragung, wobei das zweite Computersystem (150) mit Empfang der Kennung (108; 128) in der Lage ist, die Vorrichtung (138) eindeutig zu adressieren,
- Aufbau eines dritten Kommunikationskanals zwischen dem zweiten Computersystem (150) und dem Sicherheitsmodul (100),
- Authentifizierung des zweiten Computersystems (150) gegenüber dem Sicherheitsmodul (100), wobei die Initialisierung der Ermöglichung einer Kommunikation des Sicherheitsmoduls (100) mit dem ersten Computersystem (166) dient, wobei vor der Initialisierung des Speicherbereichs (136) ausschließlich für das zweite Computersystem (150) des Satzes von Computersystemen eine erfolgreiche Authentifizierung gegenüber dem Sicherheitsmodul (100) möglich ist,
- Nach erfolgreicher Authentifizierung des zweiten Computersystems (150) gegenüber dem Sicherheitsmodul (100), Empfang von Daten von dem zweiten Computersystem (150) durch das Sicherheitsmodul (100) durch eine gesicherte Übertragung und Speicherung der Daten in dem Speicherbereich (136) zur Initialisierung des Speicherbereichs (136), wobei erst aufgrund der gespeicherten Daten die Kommunikation des ersten Computersystems (166) und dem Sicherheitsmodul (100) unter Umgehung des zweiten Computersystems (150) ermöglicht wird,
wobei die gespeicherten Daten den ersten Teil der Angabe (125) und eine Energieerfassungsanwendung (130; 132; 134; 174) umfassen, wobei es sich bei dem zweiten Computersystem (150) um ein Computersystem einer vertrauenswürdigen Instanz handelt, wobei die Initialisierung dadurch angestoßen wird, dass eine Übermittlung einer Mitteilung, welche die Kennung (108; 128) des Sicherheitsmoduls (100) umfasst, an das erste Computersystem (166) erfolgt.

2. Verfahren nach Anspruch 1, wobei die gesicherte Übertragung durch eine Ende-zu-Ende Verschlüsselung zwischen dem zweiten Computersystem (150) und dem Sicherheitsmodul (100) erfolgt.

3. Verfahren nach einem der vorigen Ansprüche 1 oder 2, wobei die Authentifizierung des zweiten Computersystems (150) gegenüber dem Sicherheitsmodul (100) mit Hilfe eines dritten Zertifikats (154) des zweiten Computersystems (150) erfolgt.

4. Verfahren nach Anspruch 3, wobei vor der Initialisierung des Speicherbereichs (136) ausschließlich bei Vorliegen des dritten Zertifikats (154) die erfolgreiche Authentifizierung gegenüber dem Sicherheitsmodul (100) möglich ist.

5. Verfahren nach einem der vorigen Ansprüche 1-4, wobei erst durch die Speicherung der Daten in dem Speicherbereich (136) zur Initialisierung des Speicherbereichs (136) das Sicherheitsmodul für eine Kommunikation mit dem ersten Computersystem (166) freigeschaltet wird, wobei durch die in dem Speicherbereich gespeicherten Daten selbst die Kommunikation mit dem ersten Computersystem (166) freigeschaltet wird.

6. Verfahren nach einem der vorigen Ansprüche 1-5, wobei vor der Initialisierung des Speicherbereichs (136) ausschließlich für das zweite Computersystem (150) des Satzes von Computersystemen ein Schreibzugriff auf den Speicherbereich (136) möglich ist.

7. Verfahren nach einem der vorigen Ansprüche, wobei die Authentifizierung des ersten und/oder zweiten Computersystems ein Challenge-Response-Verfahren umfasst und/oder wobei ein zweiter Teil der Angabe (125) in dem zweiten Zertifikat enthalten ist.

8. Verfahren nach einem der vorigen Ansprüche 1-7, wobei das zweite Zertifikat durch das zweite Computersystem (150) signiert ist.

9. Verfahren nach einem der vorigen Ansprüche, wobei der Aufbau des ersten Kommunikationskanals durch das Sicherheitsmodul (100) erfolgt, wobei die Übermittlung des Teils der in der Angabe (125) spezifizierten Messdatenelemente und/oder Konfigurationsdaten durch ein Push-Verfahren erfolgt.

10. Verfahren nach einem der vorigen Ansprüche, wobei der Vorrichtung die Angabe (125) in Form der Energieerfassungsanwendung (130; 132; 134; 174) zugeordnet ist, wobei die Energieerfassungsanwendung (130; 132; 134; 174) den Zugriff des ersten Computersystems (166) auf die Messdatenelemente und/oder Konfigurationsdaten anhand der Angabe (125) überwacht.

11. Verfahren nach einem der vorigen Ansprüche, wobei die Energieerfassungsanwendung (130; 132; 134; 174) den Aufbau des ersten Kommunikationskanals initiiert.

12. Verfahren nach einem der vorigen Ansprüche, wobei die in dem Speicherbereich (136) gespeicherten Daten die Energieerfassungsanwendung (130; 132; 134; 174) umfassen, wobei die Energieerfassungsanwendung (130; 132; 134; 174) mit den Daten von dem zweiten Computersystem (150) durch das Sicherheitsmodul (100) empfangen wurde.

13. Verfahren nach einem der vorigen Ansprüche, wobei das Sicherheitsmodul (100) die Form einer Chipkarte hat.

14. Computerprogrammprodukt mit von einem Prozessor ausführbaren Instruktionen zur Durchführung der Verfahrensschritte gemäß einem der vorigen Ansprüche.

## Claims

1. A method for communicating energy consumption-specific measurement data elements, recorded by a smart meter (142; 144; 146; 148), from a smart meter device (138) to a first computer system (166) of an energy supplier and/or meter operator, wherein the device (138) is a smart meter gateway, wherein the device (138) has a security module (100), wherein the security module (100) has an identifier (108; 128) in the form of a GUID, which uniquely identifies the security module (100) and is stored in a memory (102) of the security module (100), wherein a GUID (128) of the smart meter gateway (138) identical to the GUID (108) of the security module (100) is stored in a memory area (136) of the smart meter gateway (138), and wherein the security module (100) serves as the sole communication interface between the device (138) and the first computer system (166), wherein the device has configuration data necessary for its operation, wherein the device is assigned a statement (125) of those measurement data elements and/or configuration data for which the first computer system (166) has a read access authorisation, wherein the method comprises:
- establishing a first communication channel between the first computer system (166) and the security module (100),
- mutually authenticating the computer system (166) and the security module (100), wherein the authentication takes place with the aid of a first certificate (104) of the security module (100) and with the aid of a second certificate of the first computer system (166), and
- after successful mutual authentication, transmitting at least a portion of the measurement data elements and/or configuration data specified in the statement (125) to the first computer system (166), via the security module (100), by a secure transmission, wherein, when transmitting the at least one portion of the measurement data elements and/or configuration data specified in the statement (125), the identifier (108; 128) is added to the transmission by the security module (100),
wherein a first portion of the statement (125) is stored in the memory area (136), wherein the method also comprises the following steps for initialisation:
- establishing a second communication channel between the first computer system (166) and a second computer system (150), wherein the first computer system (166) and the second computer system (150) are assigned to a set of computer systems connected via a network,
- authenticating the first computer system (166) to the second computer system (150), wherein the second certificate of the first computer system (166) is checked by the second computer system (150),
- after successful authentication of the first computer system (166) to the second computer system (150), receiving of data and of the identifier (108; 128) of the security module (100) from the first computer system (166) by the second computer system (150) through a secure transmission, wherein the second computer system (150), upon receipt of the identifier (108; 128), is able to uniquely address the device (138),
- establishing a third communication channel between the second computer system (150) and the security module (100),
- authenticating the second computer system (150) with respect to the security module (100), wherein the initialisation serves to enable communication of the security module (100) with the first computer system (166), wherein, prior to the initialisation of the memory area (136), a successful authentication with respect to the security module (100) is possible only for the second computer system (150) of the set of computer systems,
- after successful authentication of the second computer system (150) with respect to the security module (100), receiving of data from the second computer system (150) by the security module (100) through a secure transmission and storing of the data in the memory area (136) in order to initialise the memory area (136), wherein the communication between the first computer system (166) and the security module (100) while bypassing the second computer system (150) is enabled only as a result of the stored data,
wherein the stored data comprise the first part of the statement (125) and an energy recording application (130; 132; 134; 174), wherein the second computer system (150) is a computer system of a trustworthy entity, wherein the initialisation is initiated in that a message, which comprises the identifier (108; 128) of the security module (100), is transmitted to the first computer system (166).

2. The method according to claim 1, wherein the secure transmission takes place through an end-to-end encryption between the second computer system (150) and the security module (100).

3. The method according to either one of preceding claims 1 or 2, wherein the authentication of the second computer system (150) with respect to the security module (100) takes place with the aid of a third certificate (154) of the second computer system (150).

4. The method according to claim 3, wherein, prior to the initialisation of the memory area (136), successful authentication with respect to the security module (100) is possible only if the third certificate (154) is present.

5. The method according to any one of preceding claims 1 to 4, wherein the security module is enabled for communication with the first computer system (166) only as a result of the storage of the data in the memory area (136) in order to initialise the memory area (136), wherein the communication with the first computer system (166) is enabled by the data itself that is stored in the memory area.

6. The method according to any one of preceding claims 1 to 5, wherein, prior to the initialisation of the memory area (136), write access to the memory area (136) is possible only for the second computer system (150) of the set of computer systems.

7. The method according to any one of the preceding claims, wherein the authentication of the first and/or second computer system comprises a challenge/response process, and/or wherein a second part of the statement (125) is contained in the second certificate.

8. The method according to any one of preceding claims 1-7, wherein the second certificate is signed by the second computer system (150).

9. The method according to any one of the preceding claims, wherein the establishment of the first communication channel takes place by way of the security module (100), wherein the transmission of the portion of the measurement data elements and/or configuration data specified in the statement (125) takes place by way of a push process.

10. The method according to any one of the preceding claims, wherein the device is assigned the statement (125) in the form of the energy recording application (130; 132; 134; 174), wherein the energy recording application (130; 132; 134; 174) monitors the access of the first computer system (166) to the measurement data elements and/or configuration data based on the statement (125).

11. The method according to any one of the preceding claims, wherein the energy recording application (130; 132; 134; 174) initiates the establishment of the first communication channel.

12. The method according to any one of the preceding claims, wherein the data stored in the memory area (136) comprise the energy recording application (130; 132; 134; 174), wherein the energy recording application (130; 132; 134; 174) was received by the security module (100) with the data from the second computer system (150).

13. The method according to any one of the preceding claims, wherein the security module (100) has the form of a chip card.

14. The computer program product with instructions that can be executed by a processor for carrying out the method steps according to any one of the preceding claims.

## Revendications

1. Procédé de communication d'éléments de données de mesures spécifiques à une consommation d'énergie saisis avec un compteur intelligent Smart Meter (142 ; 144 ; 146 ; 148) d'un dispositif Smart Meter (138) à un premier système informatique (166) d'un fournisseur d'énergie et/ou d'un exploitant de points de mesures, où, dans le cas du dispositif (138), il s'agit d'd'une passerelle Smart Meter, où le dispositif (138) présente un module de sécurité (100), où le module de sécurité (100) présente un identifiant (108 ; 128) sous la forme d'un identificateur global unique GUID, lequel identifie sans équivoque le module de sécurité (100) et est enregistré dans une mémoire (102) du module de sécurité (100), où un GUID (128) de la passerelle Smart Meter (138) identique au GUID (108) du module de sécurité (100) est enregistré dans une zone de mémoire (136) de la passerelle Smart Meter (138), et où le module de sécurité (100) sert en tant qu'unique interface de communication du dispositif (138) avec le premier système informatique (166), où le dispositif présente des données de configuration nécessaires à son fonctionnement, où au dispositif est associée une indication (125) des éléments de données de mesures et/ou de données de configuration en question pour lesquels le premier système informatique (166) est autorisé pour un accès en lecture, où le procédé comprend :
- l'établissement d'un premier canal de communication entre le premier système informatique (166) et le module de sécurité (100),
- l'authentification réciproque du système informatique (166) et du module de sécurité (100), où l'authentification a lieu à l'aide d'un premier certificat (104) du module de sécurité (100) et à l'aide d'un deuxième certificat du premier système informatique (166),
- après une authentification réciproque réussie, la transmission d'au moins une partie des éléments de données de mesures spécifiées dans l'indication (125) et/ou des données de configuration par le biais du module de sécurité (100) vers le premier système informatique (166) par une transmission sécurisée, où, lors de la transmission de l'au moins une partie des éléments de données de mesure spécifiées dans l'indication (125) et/ou des données de configuration, l'identifiant (108 ; 128) est ajouté à la transmission par le module de sécurité (100),
où une première partie de l'indication (125) est enregistrée dans la zone de mémoire (136), où le procédé présente en outre pour l'initialisation les étapes :
- d'établissement d'un deuxième canal de communication entre le premier système informatique (166) et un deuxième système informatique (150), où le premier système informatique (166) et le deuxième système informatique (150) sont associés à un ensemble de systèmes informatiques reliés par le biais d'un réseau,
- d'authentification du premier système informatique (166) par rapport au deuxième système informatique (150), où le deuxième certificat du premier système informatique (166) est vérifié par le deuxième système informatique (150),
- après l'authentification réussie du premier système informatique (166) par rapport au deuxième système informatique (150), de réception de données, ainsi que de l'identifiant (108 ; 128) du module de sécurité (100) du premier système informatique (166) par le deuxième système informatique (150) par une transmission sécurisée, où le deuxième système informatique (150) est en mesure de s'adresser sans équivoque au dispositif (138) avec la réception de l'identifiant (108 ; 128),
- d'établissement d'un troisième canal de communication entre le deuxième système informatique (150) et le module de sécurité (100),
- d'authentification du deuxième système informatique (150) par rapport au module de sécurité (100), où l'initialisation sert à rendre possible une communication du module de sécurité (100) avec le premier système informatique (166), où, avant l'initialisation de la zone de mémoire (136),une authentification réussie par rapport au module de sécurité (100) est possible exclusivement pour le deuxième système informatique (150) de l'ensemble des systèmes informatiques,
- après l'authentification réussie du deuxième système informatique (150) par rapport au module de sécurité (100), de réception de données du deuxième système informatique (150) par le module de sécurité (100) par une transmission sécurisée et de stockage des données dans la zone de mémoire (136) pour l'initialisation de la zone de mémoire (136), où, uniquement en raison des données enregistrées, la communication du premier système informatique (166) et du module de sécurité (100) est rendue possible moyennant un contournement du deuxième système informatique (150),
où les données enregistrées comprennent la première partie de l'indication (125) et une application de mesure de l'énergie (130 ; 132 ; 134 ; 174), où, dans le cas du deuxième système informatique (150), il s'agit d'un système informatique d'une instance digne de confiance, où l'initialisation est lancée par le fait qu'une transmission d'une information, laquelle comprend l'identifiant (108 ; 128) du module de sécurité (100) a lieu vers le premier système informatique (166).

2. Procédé selon la revendication 1, dans lequel la transmission sécurisée a lieu par un chiffrement de bout en bout entre le deuxième système informatique (150) et le module de sécurité (100).

3. Procédé selon l'une des revendications précédentes 1 ou 2, dans lequel l'authentification du deuxième système informatique (150) par rapport au module de sécurité (100) a lieu à l'aide d'un troisième certificat (154) du deuxième système informatique (150).

4. Procédé selon la revendication 3, dans lequel, avant l'initialisation de la zone de mémoire (136), l'authentification réussie par rapport au module de sécurité (100) est possible exclusivement par la présentation du troisième certificat (154).

5. Procédé selon l'une des revendications précédentes 1 à 4, dans lequel le module de sécurité n'est libéré pour une communication avec le premier système informatique (166) que par l'enregistrement des données dans la zone de mémoire (136) pour l'initialisation de la zone de mémoire (136), où, la communication avec le premier système informatique (166) n'est libérée que par les données enregistrées dans la zone de mémoire elles-mêmes.

6. Procédé selon l'une des revendications précédentes 1 à 5, dans lequel, avant l'initialisation de la zone de mémoire (136), un accès en écriture vis-à-vis de la zone de mémoire (136) est possible exclusivement pour le deuxième système informatique (150) de l'ensemble de systèmes informatiques.

7. Procédé selon l'une des revendications précédentes, dans lequel l'authentification du premier et/ou du deuxième système informatique comprend un procédé de défis-réponses et/ou où une deuxième partie de l'indication (125) est contenue dans le deuxième certificat.

8. Procédé selon l'une des revendications précédentes 1 à 7, dans lequel le deuxième certificat est signé par le deuxième système informatique (150).

9. Procédé selon l'une des revendications précédentes, dans lequel l'établissement du premier canal de communication a lieu par le module de sécurité (100), où la transmission de la partie des éléments de données de mesures spécifiés dans l'indication (125) et/ou des données de configuration a lieu par un procédé en mode « push ».

10. Procédé selon l'une des revendications précédentes, dans lequel l'indication (125) sous la forme de l'application de mesure de l'énergie (130 ; 132 ; 134 ; 174) est associée au dispositif, où l'application de mesure de l'énergie (130 ; 132 ; 134 ; 174) surveille l'accès du premier système informatique (166) aux éléments de données de mesures et/ou aux données de configuration à l'aide de l'indication (125).

11. Procédé selon l'une des revendications précédentes, dans lequel l'application de mesure de l'énergie (130 ; 132 ; 134 ; 174) initialise l'établissement du premier canal de communication.

12. Procédé selon l'une des revendications précédentes, dans lequel les données stockées dans la zone de mémoire (136) comprennent l'application de mesure de l'énergie (130 ; 132 ; 134 ; 174), où l'application de mesure de l'énergie (130 ; 132 ; 134 ; 174) a été reçue avec les données par le deuxième système informatique (150) par le module de sécurité (100).

13. Procédé selon l'une des revendications précédentes, dans lequel le module de sécurité (100) a la forme d'une carte à puce.

14. Produit de programme informatique avec des instructions exécutables par un processeur pour la réalisation des étapes de procédé selon l'une des revendications précédentes.
